# EUROPEAN PATENT APPLICATION

(11) **EP 2 492 574 A2**
(43) Date of publication of application: **29.08.2012**
(21) Application number: 11174351.4
(22) Date of filing: 18.07.2011
(51) Int. Cl.: F16M 13/02, F16M 11/10, F16M 11/20

(54) **Electronic device having adjustable mounting module**

(30) Priority: 22.02.2011 TW 100105831
(71) Applicant: HannStar Display Corp., Wugu Dist. New Taipei City 248 (TW)
(72) Inventor: Chiang, Chang-an, New Taipei City 241 (TW)
(74) Representative: Petraz, Gilberto Luigi

(57) **Abstract**

An electronic device having an adjustable mounting module (1) is disclosed. The adjustable mounting module comprises a shaft bracket (10), a base (11) and an adjusting member (12). The shaft bracket has at least one fixing member (100) and a bracket body (101). The bracket body is pivotally mounted on the fixing member. The base is pivotally mounted on the bracket body and is for an electronic assembly (2) to be mounted thereon. The adjusting member is pivotally mounted on bracket body and correspondingly geared with the base. With the foregoing structure, a user can use the adjusting member to drive the base or the bracket body to rotate and thereby adjusts view angle of the electronic assembly.

## Description

### BACKGROUND OF THE INVENTION

With the development of technology, the internet bandwidth constantly increases and transmitting information of image and sound through internet is more convenient. Therefore, more and more people communicate with each other through internet by using related communicating software. To meet such requirements, present electronic devices often have built-in webcams and microphones.

Most of the built-in webcams of the electronic devices currently on the market are fixed type or capable of being adjusted along only one single direction of view angle, such that the usage of webcams has many restrictions. As for large-sized electronic devices, it may take lots of efforts for the user to adjust the view angle of the webcams.

Hence, it is necessary to provide an electronic device having an adjustable mounting module to overcome the problems existing in the conventional technology.

### SUMMARY OF THE INVENTION

In consideration of the shortcomings of prior art, a primary object of the invention is to provide an electronic device having an adjustable mounting module, wherein the electronic device is mounted on a product case through the adjustable mounting module and the user may adjust the angle of the electronic device as needed by the adjustable mounting module.

To achieve foregoing object, the present invention provides an electronic device having an adjustable mounting module that comprises:
an adjustable mounting module having a shaft bracket, a base and an adjusting member, wherein the shaft bracket has at least one fixing member and a bracket body, the fixing member is to be mounted on a product case, the bracket body is pivotally mounted on the fixing member; the base is pivotally mounted on the bracket body; the adjusting member is pivotally mounted on the bracket body and correspondingly geared with the base such that the adjusting member can be applied with forces in different directions to drive the base or the bracket body to rotate; and
an electronic assembly mounted on the base and having a circuit board and an electronic unit, wherein the circuit board is mounted on a surface of the base and the electronic unit is mounted on the circuit board.

In one embodiment of the present invention, the electronic unit is an image-capturing unit, a sound-outputting unit or a light-emitting unit.

In one embodiment of the present invention, the adjusting member drives the bracket body to rotate vertically around the fixing member when being applied with a vertical force; and the adjusting member drives the base to rotate horizontally when being applied with a horizontal force.

In one embodiment of the present invention, the bracket body has a plane portion, at least one connecting arm, a first shaft portion and a second shaft portion, wherein the at least one connecting arm extends from an edge of the plane portion and is pivotally and correspondingly connected to the at least one fixing member; the first and the second shaft portions are mounted on a surface of the plane portion; and the base and the adjusting member are respectively mounted on the first and the second shaft portions.

In one embodiment of the present invention, the base is a board and has a connector, wherein the connector is formed perpendicularly on a sidewall of the base and connected to the first shaft portion, so that the base is able to rotate around the first shaft portion; the adjusting member is a plate and has a connecting portion, wherein the connecting portion of the adjusting member is formed on a surface of the adjusting member and connected to the second shaft portion, so that the adjusting member is able to rotate around the second shaft portion.

In one embodiment of the present invention, the connector of the base has a through hole and a first transmission portion, wherein the through hole correspondingly and pivotally connected with the first shaft portion, and the first transmission portion is formed on an edge of the connector of the base; the connecting portion of the adjusting member is a through hole correspondingly and pivotally connected with the second shaft portion; the adjusting member further has a second transmission portion formed on an edge of the adjusting member and correspondingly geared with the first transmission portion.

In one embodiment of the present invention, the first transmission portion is a gear structure; and the second transmission portion is a gear structure.

The present invention further provides an adjustable mounting module comprising:
a shaft bracket having at least one fixing member and a bracket body, and the fixing member is used to be firmly mounted on a product case, and the bracket body is pivotally mounted on the fixing member;
a base pivotally mounted on the bracket body, and the base allows an electronic assembly to be mounted thereon; and
an adjusting member pivotally mounted on the bracket body and correspondingly geared with the base, wherein the adjusting member is to be applied with forces in different directions to drive the base or the bracket body to rotate.

In one embodiment of the present invention, the adjusting member drives the bracket body to rotate vertically around the fixing member when being applied with a vertical force; and the adjusting member drives the base to rotate horizontally when being applied with a horizontal force.

In one embodiment of the present invention, the bracket body has at least one connecting arm, and the at least one connecting arm is pivotally and correspondingly connected to the at least one fixing member.

In one embodiment of the present invention, the bracket body has a plane portion, a first shaft portion and a second shaft portion, wherein the first and the second shaft portions are mounted on a surface of the plane portion; and the base and the adjusting member are respectively mounted on the first and the second shaft portions.

In one embodiment of the present invention, the base is a board and has a connector, wherein the connector is formed perpendicularly on a sidewall of the base and connected to the first shaft portion, so that the base is able to rotate around the first shaft portion; the adjusting member is a plate and has a connecting portion, wherein the connecting portion of the adjusting member is formed on a surface of the adjusting member and connected to the second shaft portion, so that the adjusting member is able to rotate around the second shaft portion.

In one embodiment of the present invention, the connector of the base has a through hole and a first transmission portion, wherein the through hole correspondingly and pivotally connected with the first shaft portion, and the first transmission portion is formed on an edge of the connector of the base; the connecting portion of the adjusting member is a through hole correspondingly and pivotally connected with the second shaft portion; the adjusting member further has a second transmission portion formed on an edge of the adjusting member and correspondingly geared with the first transmission portion.

In one embodiment of the present invention, the first transmission portion is a gear structure; and the second transmission portion is a gear structure.

With the aforementioned structure, a user may operate the adjusting member to drive the base or the bracket body to rotate, so as to horizontally or vertically adjust the view angle of the electronic assembly. Comparing with the prior art which only provides a single-direction adjustment of view angle, the present invention provides the user a more flexible adjustment of view angle.

### DESCRIPTION OF THE DRAWINGS

Fig. 1 is an exploded perspective view of a preferred embodiment of an electronic device having an adjustable mounting module in accordance with the present invention;
Fig. 2 is an assembled perspective view of a preferred embodiment of the electronic device having an adjustable mounting module in accordance with the present invention;
Fig. 3 is another assembled perspective view of a preferred embodiment of the electronic device having an adjustable mounting module in accordance with the present invention;
Fig. 4 is a perspective view showing the present invention mounted on a product case;
Fig. 5 is an operational view showing the present invention mounted on a product case;
Fig. 6 is a detailed operational view of Fig. 5;
Fig. 7 is another operational view showing the present invention mounted on a product case; and
Fig. 8 is a detailed operational view of Fig. 7.

### DETAILED DESCRIPTION OF THE PREFERRED EMBODIMENTS

The foregoing objects, features and advantages adopted by the present invention can be best understood by referring to the following detailed description of the preferred embodiments and the accompanying drawings. Furthermore, the directional terms described in the present invention, such as upper, lower, front, rear, left, right, inner, outer, side and etc., are only directions referring to the accompanying drawings, so that the used directional terms are used to describe and understand the present invention, but the present invention is not limited thereto.

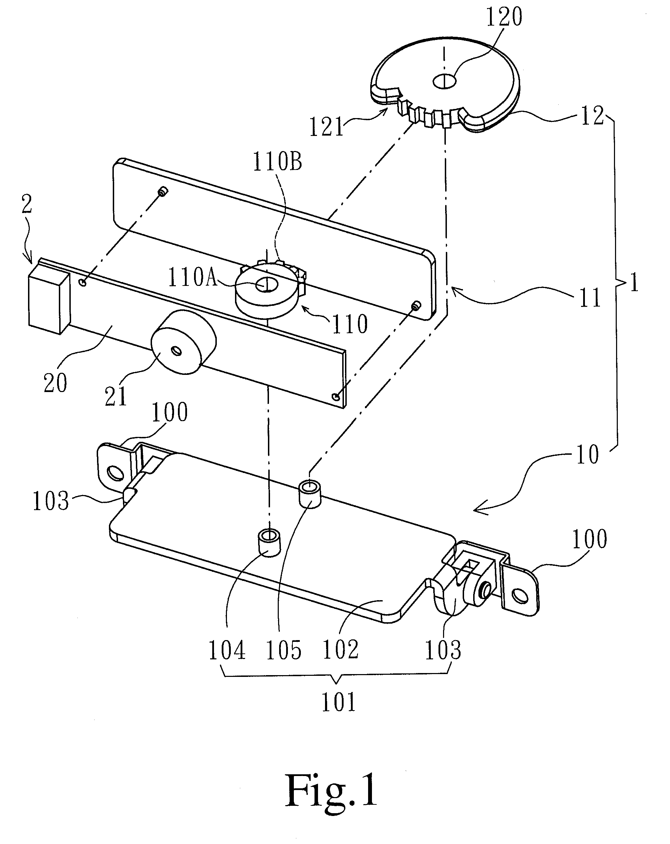

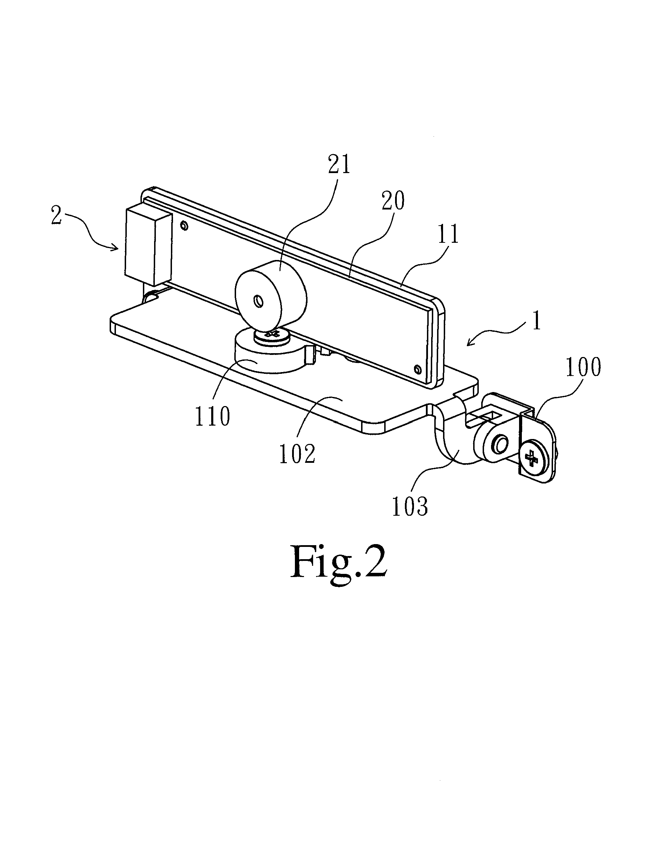

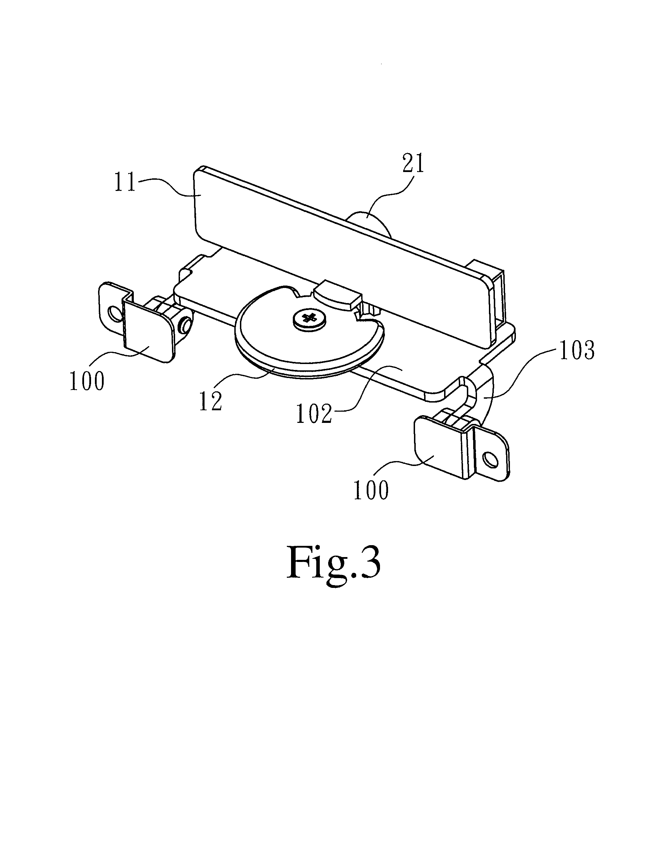

Please refer to Figs. 1, 2, and 3, wherein Fig. 1 discloses an exploded perspective view of a preferred embodiment of an electronic device having an adjustable mounting module in accordance with the present invention, Figs 2 and 3 are assembled perspective views of the electronic device having the adjustable mounting module. The electronic device mainly has an adjustable mounting module 1 and an electronic assembly 2.

The adjustable mounting module 1 has a shaft bracket 10, a base 11 and an adjusting member 12.

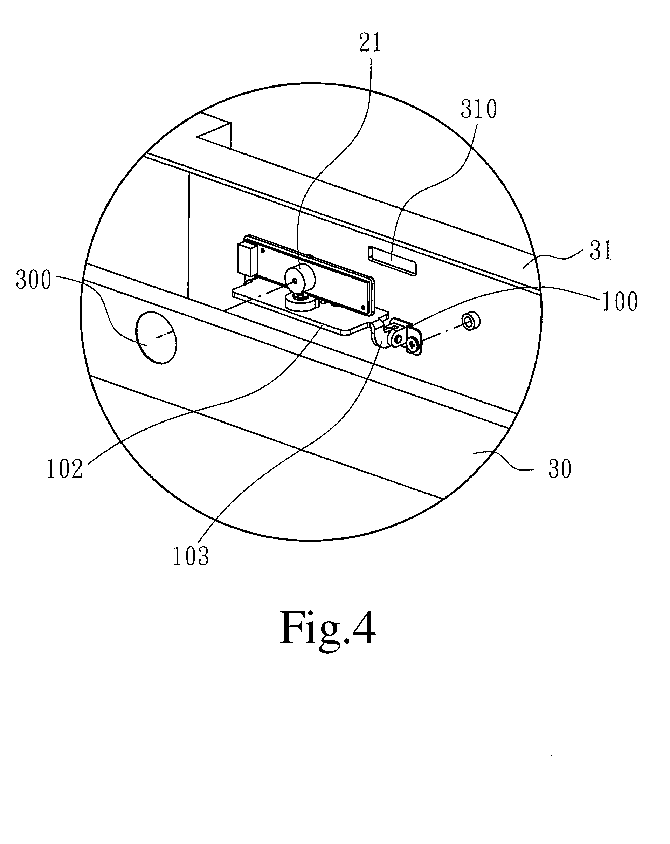

The shaft bracket 10 has at least one fixing member 100 and a bracket body 101. The bracket body 101 is pivotally mounted on the fixing member 100. Further refer to Fig. 4, which is a perspective view showing the electronic device of the present invention mounted on a product case. In the embodiment, the product case is a case of a liquid crystal display, and the present invention is a webcam device. The product case has a front frame 30 and a rear frame 31. The shaft bracket 10 has two fixing members 100, and both of the fixing members 100 are separated by an interval and are attached to the rear frame 31 by screw-fastening. The bracket body 101 has a plane portion 102, at least one connecting arm 103, a first shaft portion 104 and a second shaft portion 105. In this embodiment, the bracket body 101 has two connecting arms 103, wherein both of the connecting arms 103 respectively extend from edges of the plane portion 102, so as to pivotally and correspondingly connected to the two fixing members 100, so that the plane portion 102 of the bracket body 101 may rotate about the two fixing members 100 as an axis via the two connecting arms 103. The first shaft portion 104 and the second shaft portion 105 are respectively mounted on a surface of the plane portion 102 and separated from each other by an interval.

The base 11 is pivotally mounted on the bracket body 10, and in this embodiment, the base 11 is mounted on the first shaft portion 104 of the bracket body 10. In more detail, the base 11 is a board and has a connector 110, wherein the connector 110 is formed perpendicularly on a sidewall of the base 11 and connected to the first shaft portion 104, so that the base 11 can rotate around the first shaft portion 104. In this embodiment, the first shaft portion 104 is a cylinder, and the connector 110 of the base 11 has a through hole 110A that correspondingly and pivotally connected with the first shaft portion 104. The connector of the base 11 further has a first transmission portion 110B which is formed on an edge of the connector 110. In the embodiment, the first transmission portion 110B is a gear structure, but not limited thereto.

The adjusting member 12 is pivotally mounted on the bracket body 101. In this embodiment, the adjusting member 12 is mounted on the second shaft portion 105 and correspondingly geared with the base 11. The adjusting member 12 can be applied with forces in different directions to drive the base 11 or the bracket body 101 to rotate. In more detail, the adjusting member 12 is a plate and has a connecting portion 120, wherein the connecting portion 120 of the adjusting member 12 is formed on a surface of the adjusting member 12 and connected to the second shaft portion 105, so that the adjusting member 12 is able to rotate around the second shaft portion 105. In this embodiment, the second shaft portion 105 is a cylinder and the connecting portion 120 of the adjusting member 12 is a through hole that correspondingly and pivotally connected with the second shaft portion 105. The adjusting member 12 further has a second transmission portion 121 which is formed on an edge of the adjusting member 12 and correspondingly geared with the first transmission portion 110B. In this embodiment, the second transmission portion 121 is a gear structure, but not limited thereto.

The electronic assembly 2 is mounted on the base 11 of the adjustable mounting module 1. The electronic assembly 2 has a circuit board 20 and an electronic unit 21, wherein the circuit board 20 is mounted on a surface of the base 11. The electronic unit 21 is mounted on the circuit board 20. Since in this embodiment the electronic device having the adjustable mounting module is a webcam device, the electronic unit 21 is an image-capturing unit. The circuit board 20 has an electrical terminal for connecting a control device, so as to transmit image signals and related control signals via the electrical terminal. Besides, the electronic unit 21 may be a sound-outputting unit or a light-emitting unit, but not limited thereto.

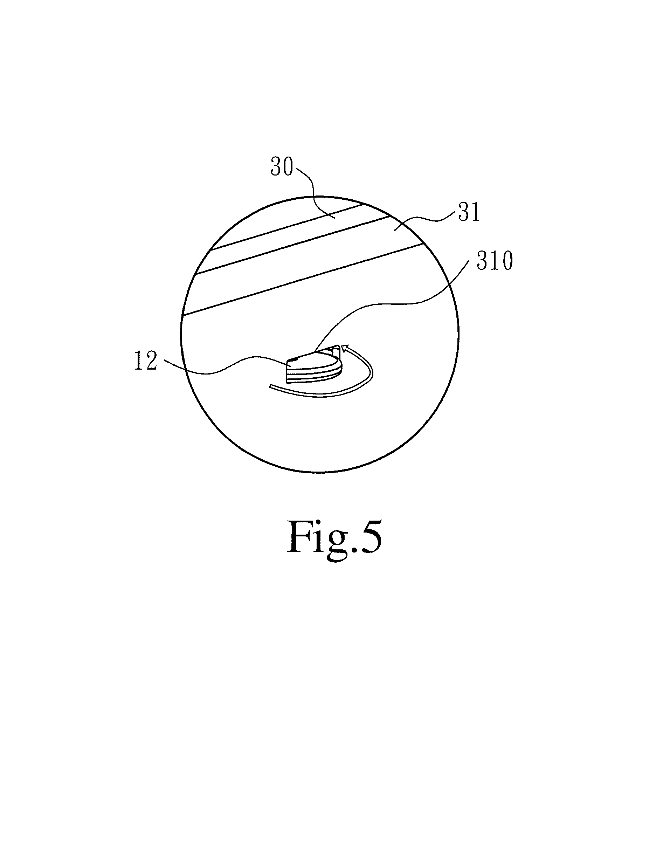

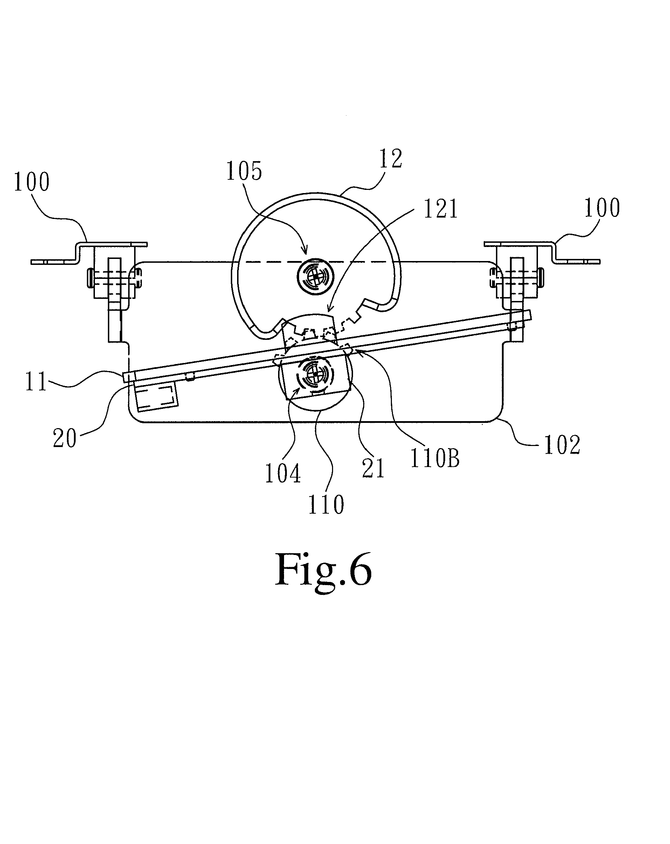

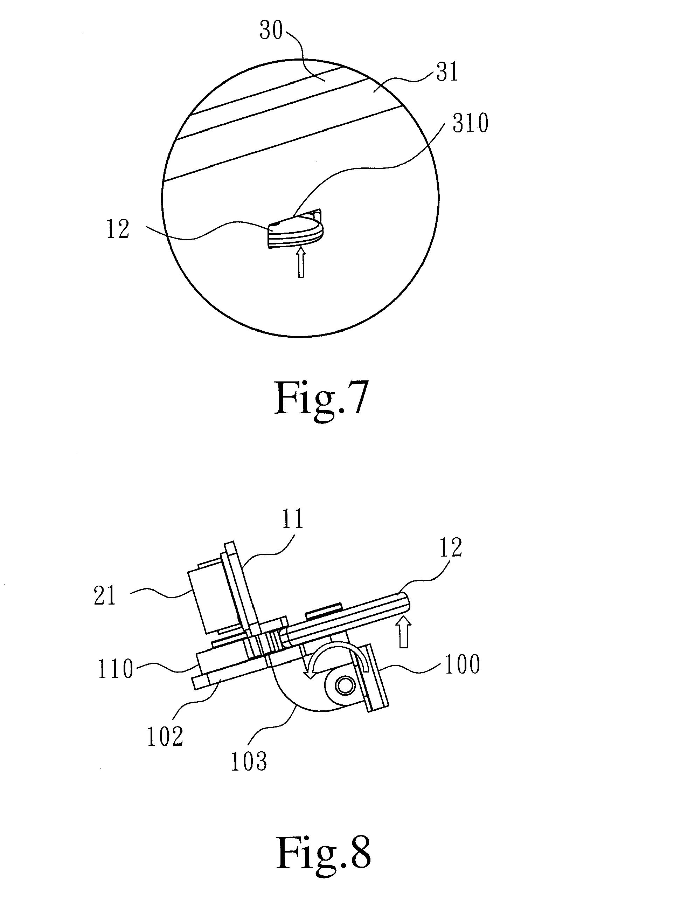

With reference to Fig.4 to Fig. 8, the rear frame 31 of the aforementioned product case has a slot 310 corresponding to the adjusting member 12 for the adjusting member 12 to be partially exposed from the product case, so as to facilitate adjusting view angle for the user. The front frame 30 of the product case has an opening 300 corresponding to the electronic unit 21. As for this embodiment, as shown in Figs. 5 and 6, when the user uses his fingers to apply a horizontal force to the adjusting member 12 to rotate the adjusting member 12, the second transmission portion 121 of the adjusting member 12 will drive the first transmission portion 110B of the base 11, so that the base 11 will rotate horizontally around the first shaft portion 104, and thereby adjust transversal view angle of the electronic unit 21 of the electronic assembly 2 on the base 11. Furthermore, with reference to Figs. 7 and 8, when the user applies a vertical force to the adjusting member 12, the adjusting member 12 will drive the bracket body 101 to rotate vertically around the fixing member 100, and thereby adjust longitudinal view angle of the electronic unit 21.

In conclusion, comparing with the conventional skill of electronic devices like built-in webcam only providing single-directional adjustment of view angle, the present invention provides a shaft bracket pivotally mounted on a product case, a base mounted pivotally on the shaft bracket and an adjusting member that is able to drive the shaft bracket and the base to rotate, so that the user can operate the adjusting member to control the base or the bracket body to rotate, and thereby horizontally or vertically adjust the view angle of the electronic assembly mounted on the base, and indeed provides a more flexible method for adjusting view angle.

The present invention has been described with a preferred embodiment thereof and it is understood that many changes and modifications to the described embodiment can be carried out without departing from the scope and the spirit of the invention that is intended to be limited only by the appended claims.

## Claims

1. An electronic device having an adjustable mounting module (1), **characterized in that** the electronic device comprises:
an adjustable mounting module (1) having a shaft bracket (10), a base (11) and an adjusting member (12), wherein the shaft bracket (10) has at least one fixing member (100) and a bracket body (101), the fixing member (100) is to be mounted on a product case, the bracket body (101) is pivotally mounted on the fixing member (100); the base (11) is pivotally mounted on the bracket body (101); the adjusting member (12) is pivotally mounted on the bracket body (101) and correspondingly geared with the base (11) such that the adjusting member (12) can be applied with forces in different directions to drive the base (11) or the bracket body (101) to rotate; and
an electronic assembly (2) mounted on the base (11) and having a circuit board (20) and an electronic unit (21), wherein the circuit board (20) is mounted on a surface of the base (11) and the electronic unit (21) is mounted on the circuit board (20).

2. The electronic device as claimed in claim 1, wherein the electronic device is an image-capturing unit, a sound-outputting unit or a light-emitting unit.

3. The electronic device as claimed in claim 2, wherein the adjusting member (12) drives the bracket body (101) to rotate vertically around the fixing member (100) when being applied with a vertical force; and the adjusting member (12) drives the base (11) to rotate horizontally when being applied with a horizontal force.

4. The electronic device as claimed in claim 2, wherein the bracket body (101) has a plane portion (102), at least one connecting arm (103), a first shaft portion (104) and a second shaft portion (105), wherein the at least one connecting arm (103) extends from an edge of the plane portion (102) and is pivotally and correspondingly connected to the at least one fixing member (100); the first and the second shaft portions (104,105) are mounted on a surface of the plane portion (102); and the base (11) and the adjusting member (12) are respectively mounted on the first and the second shaft portions (104,105).

5. The electronic device as claimed in claim 4, wherein the base (11) is a board and has a connector (110), wherein the connector (110) is formed perpendicularly on a sidewall of the base (11) and connected to the first shaft portion (104), so that the base (11) is able to rotate around the first shaft portion (104); the adjusting member (12) is a plate and has a connecting portion (120), wherein the connecting portion (120) of the adjusting member (12) is formed on a surface of the adjusting member (12) and connected to the second shaft portion (105), so that the adjusting member (12) is able to rotate around the second shaft portion (105).

6. The electronic device as claimed in claim 5, wherein the connector (110) of the base (11) has a through hole (110A) and a first transmission portion (110B), wherein the through hole (110A) correspondingly and pivotally connected with the first shaft portion (104), and the first transmission portion (110B) is formed on an edge of the connector (110) of the base (11); the connecting portion (120) of the adjusting member (12) is a through hole correspondingly and pivotally connected with the second shaft portion (105); the adjusting member (12) further has a second transmission portion (121) formed on an edge of the adjusting member (12) and correspondingly geared with the first transmission portion (110B).

7. The electronic device as claimed in claim 6, wherein the first transmission portion (110B) is a gear structure; and the second transmission portion (121) is a gear structure.

8. An adjustable mounting module (1), **characterized in that** the adjustable mounting module (1) comprises:
a shaft bracket (10) having at least one fixing member (100) and a bracket body (101), and the fixing member (100) is used to be firmly mounted on a product case, and the bracket body (101) is pivotally mounted on the fixing member (100);
a base (11) pivotally mounted on the bracket body (101), and the base (11) allows an electronic assembly (2) to be mounted thereon; and
an adjusting member (12) pivotally mounted on the bracket body (101) and
correspondingly geared with the base (11), wherein the adjusting member (12) is to be applied with forces in different directions to drive the base (11) or the bracket body (101) to rotate.

9. The adjustable mounting module (1) as claimed in claim 8, wherein the adjusting member (12) drives the bracket body (101) to rotate vertically around the fixing member (100) when being applied with a vertical force; and the adjusting member (12) drives the base (11) to rotate horizontally when being applied with a horizontal force.

10. The adjustable mounting module (1) as claimed in claim 8, wherein the bracket body (101) has at least one connecting arm (103), and the at least one connecting arm (103) is pivotally and correspondingly connected to the at least one fixing member (100).

11. The adjustable mounting module (1) as claimed in claim 8, wherein the bracket body (101) has a plane portion (102), a first shaft portion (104) and a second shaft portion (105), wherein the first and the second shaft portions (104, 105) are mounted on a surface of the plane portion (102); and the base (11) and the adjusting member (12) are respectively mounted on the first and the second shaft portions (104, 105).

12. The adjustable mounting module (1) as claimed in claim 11, wherein the base (11) is a board and has a connector (110), wherein the connector (110) is formed perpendicularly on a sidewall of the base (11) and connected to the first shaft portion (104), so that the base (11) is able to rotate around the first shaft portion (104); the adjusting member (12) is a plate and has a connecting portion (120), wherein the connecting portion (120) of the adjusting member (12) is formed on a surface of the adjusting member (12) and connected to the second shaft portion (105), so that the adjusting member (12) is able to rotate around the second shaft portion (105).

13. The adjustable mounting module (1) as claimed in claim 12, wherein the
connector (110) of the base (11) has a through hole (110A) and a first transmission portion (110B), wherein the through hole (110A) correspondingly and pivotally connected with the first shaft portion (104), and the first transmission portion (110B) is formed on an edge of the connector (110) of the base (11); the connecting portion (120) of the adjusting member (12) is a through hole correspondingly and pivotally connected with the second shaft portion (105); the adjusting member (12) further has a second transmission portion (121) formed on an edge of the adjusting member (12) and correspondingly geared with the first transmission portion (110B).

14. The adjustable mounting module (1) as claimed in claim 13, wherein the first transmission portion (110B) is a gear structure; and the second transmission portion (121) is a gear structure.
